# EUROPÄISCHE PATENTSCHRIFT

(11) **EP 3 748 366 B1**
(45) Veröffentlichungstag und Bekanntmachung des Hinweises auf die Patenterteilung: **21.12.2022**
(21) Anmeldenummer: 19178702.7
(22) Anmeldetag: 06.06.2019
(51) Int. Cl.: G01N 35/10, G01N 35/04

(54) **VORRICHTUNG ZUR LAGERUNG VON REAGENZBEHÄLTERN AUF MEHREREN EBENEN**
DEVICE FOR STORING MULTI-LEVEL REAGENT VESSELS
DISPOSITIF DE STOCKAGE DES RÉCIPIENTS À RÉACTIFS À PLUSIEURS NIVEAUX

(43) Veröffentlichungstag der Anmeldung: 09.12.2020
(73) Patentinhaber: Siemens Healthcare Diagnostics Products GmbH, 35041 Marburg (DE)
(72) Erfinder: Michels, Thorsten, 64521 Gross-Gerau (DE)

(56) Entgegenhaltungen:
- EP-A1- 2 746 774
- EP-A2- 2 261 675
- JP-A- H10 267 936
- US-A1- 2010 132 484
- US-A1- 2019 004 075

## Beschreibung

Die Erfindung betrifft eine Vorrichtung zur Lagerung von Reagenzbehältern auf mehreren Ebenen für ein automatisches Analysegerät.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

In medizintechnischen Geräten wie z.B. diagnostischen Analyzern zur automatischen Analyse und Untersuchung von z.B. in-vitro Proben von biologischen Körperflüssigkeiten eingesetzt werden, werden beispielsweise die benötigten Reagenzien mittels einer Pipettiervorrichtung mit einer Pipettiernadel in eine Messküvette eingefüllt. Die Messküvette wird dabei mit einem Küvettengreifer innerhalb des automatischen Analysegerätes zu verschiedenen Positionen mittels eines Robotorarms automatisch verfahren, der Teil einer Robotorstation ist. Nach der Messung wird die benutzte Messküvette zur Entsorgung durch einen Abfallschacht in einen Abfallbehälter verbracht.

In solchen automatischen Analysatoren werden Verbrauchsmaterialien wie z.B. Reagenzien im Gerät gespeichert, um einen automatischen Betrieb über eine längere Zeit bzw. zur Analyse von einer größeren Anzahl von Proben zu ermöglichen. Typischerweise erfolgt dies indem Reagenzien in Reagenzbehältern flächig auf drehbaren Reagenzrädern oder auf Tabletts im Gerät angeordnet werden. Da typischerweise eine größere Anzahl von Reagenzien benötigt wird, wird für die Lagerung der Reagenzien auf dem Gerät viel Fläche benötigt. Dies wirkt sich jedoch sehr nachteilig auf die benötigte Stellfläche des Analysators aufgrund dessen entsprechender Größe im Labor aus.

Die Vorrichtungen aus dem Stand der Technik ermöglichen daher nicht eine größere Anzahl von Reagenzbehältern in einem automatischen Analysator anzuordnen, ohne dass dessen Stellfläche im Labor entsprechend vergrößert ist.

Bekannte Vorrichtungen zeigen EP 2 261 675 A2 und JP H10 267936 A.

Es ist daher Aufgabe der Erfindung, einen automatischen Betrieb eines Analysators über eine längere Zeit bzw. zur Analyse von einer größeren Anzahl von Proben zu ermöglichen, ohne dass der Analysator eine vergrößerte Stellfläche im Labor benötigt.

### Diese Aufgabe wird erfindungsgemäß durch die im Folgenden beschriebenen Gegenstände und Verfahren gelöst.

Es wurde gefunden, dass eine verbesserte Vorrichtung zur Lagerung von Reagenzbehältern in automatischen Analysatoren erreicht werden kann, wenn die Vorratshaltung der Reagenzbehälter auf mehreren Ebenen übereinander angeordnet erfolgt, wobei die Anordnung so erfolgt, dass der Zugriff auf die Reagenzbehälter durch einen Pipettor in der Vertikalen von oben für Reagenzbehälter auf allen der Ebenen gewährleistet ist.

Dies kann erfindungsgemäß erreicht werden, indem drehbare Räder übereinander angeordnet werden. Dabei muss es eine Position des oberen Rads bzw. der oberen Räder geben, in der z.B. eine Pipettiernadel oder eine andere Beladeeinheit durch das obere Rad bzw. die oberen Räder hindurch auf das untere Rad bzw. die unteren Räder zugreifen kann.

Ebenfalls kann dies erfindungsgemäß erreicht werden, wenn die Gefäße auf Ebenen übereinander angeordnet werden, die leicht zueinander verschoben sind oder aktiv verschiebbar sind, so dass z.B. eine Pipettiernadel oder eine andere Beladeeinheit durch die obere Ebene bzw. die oberen Ebenen hindurch auf die untere Ebene bzw. die unteren Ebenen zugreifen kann.

Dies hat den Vorteil, dass bei gleicher benötigter Fläche die Anzahl der Gefäße bzw. Reagenzbehälter deutlich erhöht werden kann und damit einen automatischen Betrieb eines Analysators über eine längere Zeit bzw. zur Analyse von einer größeren Anzahl von Proben zu ermöglichen, ohne dass der Analysator eine vergrößerte Stellfläche im Labor benötigt.

Gegenstand der vorliegenden Erfindung ist insbesondere eine Vorrichtung zur Lagerung von Reagenzbehältern auf mehreren Ebenen für ein automatisches Analysegerät, die Vorrichtung umfassend
- eine Pipettiervorrichtung umfassend eine Pipettiernadel zum pipettieren von Reagenzien,
- eine erste Vorrichtung umfassend eine Mehrzahl von ersten Aufnahmepositionen für Reagenzbehälter, wobei die ersten Aufnahmepositionen auf einer ersten Ebene angeordnet sind,
- eine zweite Vorrichtung umfassend eine Mehrzahl von zweiten Aufnahmepositionen für Reagenzbehälter, wobei die zweiten Aufnahmepositionen auf einer zweiten Ebene angeordnet sind,

wobei die zweite Vorrichtung wenigstens teilweise über der ersten Vorrichtung angeordnet ist,
wobei die zweite Ebene wenigstens teilweise über der ersten Ebene angeordnet ist,
wobei die Pipettiernadel wenigstens teilweise über der ersten und der zweiten Vorrichtung angeordnet ist,
wobei die ersten Aufnahmepositionen auf der ersten Ebene und die zweiten Aufnahmepositionen auf der zweiten Ebene verschiebbar und/oder jeweils um eine Achse drehbar sind,
wobei eine Aussparung in der zweiten Vorrichtung in der zweiten Ebene vorgesehen ist, wobei die Pipettiervorrichtung mittels der Pipettiernadel durch die Aussparung von oben auf mindestens einen in einer der ersten Aufnahmepositionen angeordneten Reagenzbehälter zur Pipettierung zugreifen kann. In einer bevorzugten Ausführung umfasst die Vorrichtung eine Mehrzahl von zweiten Vorrichtungen, wobei die zweiten Vorrichtungen jeweils wenigstens teilweise übereinander über der ersten Vorrichtung angeordnet sind.

In einer bevorzugten Ausführung kann die die Aussparung durch Verdrehung und/oder Verschiebung der ersten Aufnahmepositionen auf der ersten Ebene und/oder der zweiten Aufnahmepositionen auf der zweiten Ebene und/oder Verdrehung und/oder Verschiebung der ersten Vorrichtung und/oder der zweiten Vorrichtung jeweils so angeordnet werden, dass die Pipettiervorrichtung mittels der Pipettiernadel durch die Aussparung von oben nacheinander auf mehrere in ersten Aufnahmepositionen angeordneten Reagenzbehälter zugreifen kann.

In einer bevorzugten Ausführung kann die Pipettiervorrichtung mittels der Pipettiernadel auf alle in zweiten Aufnahmepositionen angeordneten Reagenzbehältern zugreifen.

Weitere bevorzugte Ausführungen ergeben sich aus Ansprüchen 4-6.

In einer bevorzugten Ausführung sind die erste und/oder die zweite Vorrichtung miteinander beweglich verbunden. In einer bevorzugten Ausführung sind die Normalen der ersten und der zweiten Ebene parallel, und wobei bevorzugt die Normale der ersten und/oder der zweiten Ebene parallel zum Richtungsvektor der Schwerkraft verläuft.

In einer bevorzugten Ausführung ist die Pipettiervorrichtung und/oder die Pipettiernadel verfahrbar, bevorzugt parallel und/oder senkrecht zur Normale der ersten und/oder der zweiten Ebene.

In einer bevorzugten Ausführung weist die Aussparung die Form eines Kreissegments, eines Kreises, eines Ovals, eines Vierecks oder eines Dreiecks auf.

In einer bevorzugten Ausführung umfasst die Vorrichtung eine Transfervorrichtung zum Transferieren von Reagenzbehältern in die ersten und/oder zweiten Aufnahmepositionen hinein und/oder aus diesen heraus. Bevorzugt kann die Transfervorrichtung dabei durch die Aussparung von oben auf mindestens eine der ersten Aufnahmepositionen zugreifen. Alternativ erfolgt die Lagerung der Gefäße bzw. Reagenzbehälter in der Vertikalen und die Gefäße bzw. Reagenzbehälter werden bei Bedarf für einen Zugriff durch die Pipettiervorrichtung in eine Ebne zum Zugriff herausgefahren, z.B. ähnlich wie Autos auf ein mehrgeschossiges Parkdeck fahren zum Parken, was hier der Lagerung entspricht, und wieder herunter bzw. heraus fahren, wo dann z.B. auf einer Ebene, die z.B. der Ebene der Straße entspricht, der Zugriff erfolgen kann.

Ein weiterer Gegenstand der Erfindung ist ein Verfahren zur Lagerung von Reagenzbehältern auf mehreren Ebenen für ein automatisches Analysegerät mithilfe einer erfindungsgemäßen Vorrichtung zur Lagerung von Reagenzbehältern auf mehreren Ebenen für ein automatisches Analysegerät, das Verfahren umfassend die folgenden Schritte:
- Anordnung mindestens eines ersten Reagenzbehälters in eine der ersten Aufnahmepositionen,
- Zugriff mittels der Pipettiernadel durch die Aussparung von oben auf den ersten Reagenzbehälter zur Pipettierung.

In bevorzugter Ausführung umfasst das Verfahren weiter folgende Schritte:
- Anordnung mindestens eines zweiten Reagenzbehälters in eine der ersten Aufnahmepositionen,
- Anordnung der Aussparung durch Verdrehung und/oder Verschiebung der ersten Aufnahmepositionen auf der ersten Ebene und/oder der zweiten Aufnahmepositionen auf der zweiten Ebene und/oder Verdrehung und/oder Verschiebung der ersten Vorrichtung und/oder der zweiten Vorrichtung, so dass die Aussparung sich über dem zweiten Reagenzbehälter befindet,
- Zugriff mittels der Pipettiernadel durch die Aussparung von oben auf den zweiten Reagenzbehälter zur Pipettierung.

Ein weiterer Gegenstand der Erfindung ist ein Analysegerät, welches eine vorgenannte erfindungsgemäße Vorrichtung zur Lagerung von Reagenzbehältern auf mehreren Ebenen für ein automatisches Analysegerät umfasst. Das Analysegerät umfasst weiter vorteilhafterweise bevorzugt einen automatischen Gefäßgreifer.

Ein weiterer Gegenstand der Erfindung ist die Verwendung einer erfindungsgemäßen Vorrichtung zur Lagerung von Reagenzbehältern auf mehreren Ebenen für ein automatisches Analysegerät, wobei das automatische Analysegerät bevorzugt einen automatischen Gefäßgreifer umfasst.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Bei einer Messküvette handelt es sich beispielsweise um eine Küvette oder ein Reaktionsgefäß aus Glas, Kunststoff oder Metall. Vorteilhafterweise ist die Messküvette aus optisch transparenten Materialien gefertigt, was besonders beim Einsatz von optischen Analyseverfahren vorteilhaft sein kann.

Die Begriffe "Messküvette" und "Küvette" werden synonym verwendet und bezeichnen den gleichen Gegenstand.

Die Begriffe "Analysegerät" und "Analyzer" werden vorliegend synonym verwendet und bezeichnen den gleichen Gegenstand.

### Die Erfindung wird anhand von Zeichnungen exemplarisch näher erläutert. Darin zeigen:

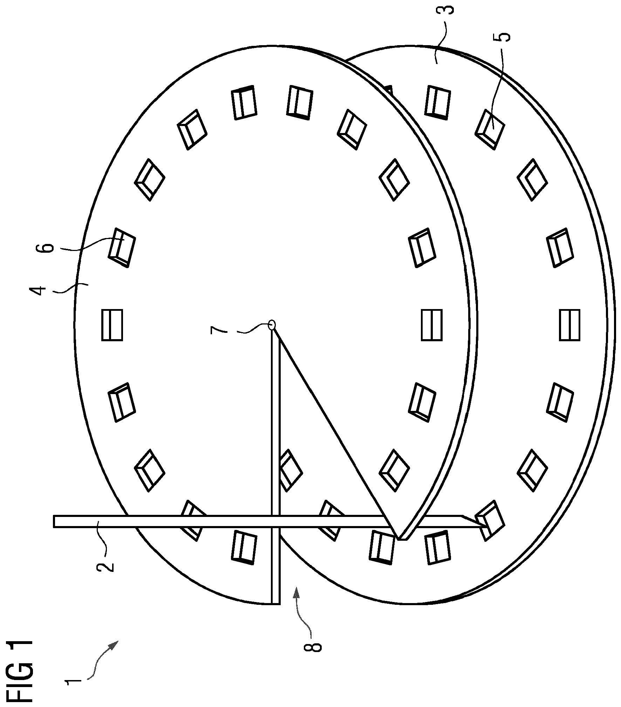

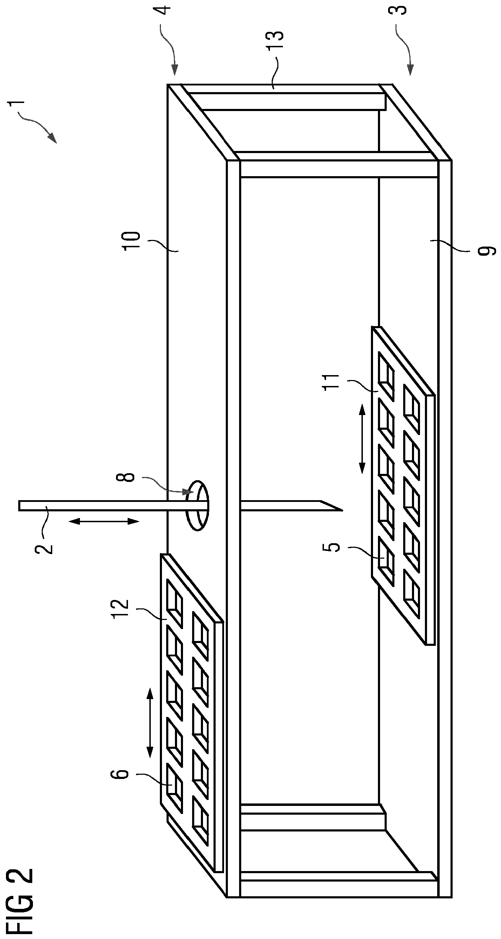

FIG 1 und 2 schematisch den Aufbau unterschiedlicher Ausführungsformen einer Vorrichtung (1) zur Lagerung von Reagenzbehältern auf mehreren Ebenen für ein automatisches Analysegerät.

### Gleiche Teile sind in allen Figuren mit denselben Bezugszeichen versehen.

Die Vorrichtung (1) gemäß FIG 1 oder 2 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Pipettiereinrichtungen und Transporteinrichtungen sowie weiterhin eine Steuereinheit zum automatisierten Steuern eines erfindungsgemäßen Verfahrens zur Lagerung von Reagenzbehältern auf mehreren Ebenen für ein automatisches Analysegerät mittels einer erfindungsgemäßem Vorrichtung zur Lagerung von Reagenzbehältern auf mehreren Ebenen für ein automatisches Analysegerät.

Die in FIG 1 gezeigten Ausführungsform der Vorrichtung (1) zur Lagerung von Reagenzbehältern auf mehreren Ebenen für ein automatisches Analysegerät umfasst eine Pipettiervorrichtung umfassend eine Pipettiernadel (2) zum pipettieren von Reagenzien.

Weiter umfasst die Vorrichtung (1) eine erste Vorrichtung (3) umfassend eine Mehrzahl von ersten Aufnahmepositionen (5) für Reagenzbehälter, wobei die ersten Aufnahmepositionen (3) auf einer ersten Ebene angeordnet sind und eine zweite Vorrichtung (4) umfassend eine Mehrzahl von zweiten Aufnahmepositionen (6) für Reagenzbehälter, wobei die zweiten Aufnahmepositionen (6) auf einer zweiten Ebene angeordnet sind. Die erste (3) und zweit Vorrichtung (4) sind als rotierbare Reagenzräder ausgestaltet.

Die zweite Vorrichtung (4) ist über der ersten Vorrichtung (3) angeordnet ist und die zweite Ebene ist über der ersten Ebene angeordnet. Die Pipettiernadel (2) ist teilweise über der ersten (3) und der zweiten Vorrichtung (4) angeordnet. Die ersten Aufnahmepositionen (5) auf der ersten Ebene und die zweiten Aufnahmepositionen (6) auf der zweiten Ebene sind jeweils um eine Achse (7) drehbar.

Eine Aussparung (8) ist in der zweiten Vorrichtung (4) in der zweiten Ebene vorgesehen, wobei die Pipettiervorrichtung mittels der Pipettiernadel (2) durch die Aussparung (8) von oben auf in der ersten Aufnahmepositionen (5) angeordnete Reagenzbehälter zur Pipettierung zugreifen kann. Die Aussparung (8) ist in der Form eines Kreissegments ausgestaltet. Das Kreissegment weist dabei eine ausreichende Größe auf, um den Zugriff mittels der Pipettiernadel (2) zur Pipettierung durch die Aussparung (8) auf die in ersten Aufnahmepositionen (5) angeordneten Reagenzbehältern zu ermöglichen.

Die in FIG 2 gezeigten Ausführungsform der Vorrichtung (1) zur Lagerung von Reagenzbehältern auf mehreren Ebenen für ein automatisches Analysegerät umfasst eine Pipettiervorrichtung umfassend eine Pipettiernadel (2) zum pipettieren von Reagenzien. Weiter umfasst die Vorrichtung (1) eine erste Vorrichtung (3) umfassend eine Mehrzahl von ersten Aufnahmepositionen (5) für Reagenzbehälter, wobei die ersten Aufnahmepositionen (3) auf einer ersten Ebene angeordnet sind. Die erste Vorrichtung (3) umfasst eine erste Platte (9) und ein erstes Tablett (11), wobei auf dem ersten Tablett (11) die ersten Aufnahmepositionen (5) angeordnet sind.

Weiter umfasst die Vorrichtung (1) eine zweite Vorrichtung (4) umfassend eine Mehrzahl von zweiten Aufnahmepositionen (6) für Reagenzbehälter, wobei die zweiten Aufnahmepositionen (6) auf einer zweiten Ebene angeordnet sind. Die zweite Vorrichtung (4) umfasst eine zweite Platte (10) und ein zweites Tablett (12), wobei auf dem zweiten Tablett (12) die zweiten Aufnahmepositionen (6) angeordnet sind.

Das erste Tablett (11) ist auf der ersten Platte (9) linear verfahrbar ausgestaltet, und das zweite Tablett (12) ist auf der zweiten Platte (10) linear verfahrbar ausgestaltet.

Die erste (3) und zweit Vorrichtung (4) sind mittels vertikaler Verbindungselemente (13) verbunden.

Die zweite Vorrichtung (4) ist über der ersten Vorrichtung (3) angeordnet ist und die zweite Ebene ist über der ersten Ebene angeordnet. Die Pipettiernadel (2) ist teilweise über der ersten (3) und der zweiten Vorrichtung (4) angeordnet.

Eine Aussparung (8) ist in der zweiten Vorrichtung (4) in der zweiten Platte (10) in der zweiten Ebene vorgesehen, wobei die Pipettiervorrichtung mittels der Pipettiernadel (2) durch die Aussparung (8) von oben auf in der ersten Aufnahmepositionen (5) angeordnete Reagenzbehälter zur Pipettierung zugreifen kann. Die Aussparung (8) ist in der Form eines Kreisausschnitts ausgestaltet. Der Kreisausschnitt weist dabei einen ausreichend großen Radius auf, um den Zugriff mittels der Pipettiernadel (2) zur Pipettierung durch die Aussparung (8) auf die in ersten Aufnahmepositionen (5) angeordneten Reagenzbehältern zu ermöglichen.

### Bezugszeichenliste

- 1: Vorrichtung
- 2: Pipettiernadel
- 3: erste Vorrichtung
- 4: zweite Vorrichtung
- 5: erste Aufnahmeposition
- 6: zweite Aufnahmeposition
- 7: Achse
- 8: Aussparung
- 9: erste Platte
- 10: zweite Platte
- 11: erstes Tablett
- 12: zweites Tablett
- 13: Verbindungselement

## Patentansprüche

1. Vorrichtung (1) zur Lagerung von Reagenzbehältern auf mehreren Ebenen für ein automatisches Analysegerät, die Vorrichtung umfassend
- eine Pipettiervorrichtung umfassend eine Pipettiernadel (2) zum pipettieren von Reagenzien,
- eine erste Vorrichtung (3) umfassend eine Mehrzahl von ersten Aufnahmepositionen (5) für Reagenzbehälter, wobei die ersten Aufnahmepositionen (5) auf einer ersten Ebene angeordnet sind,
- eine zweite Vorrichtung (4) umfassend eine Mehrzahl von zweiten Aufnahmepositionen (6) für Reagenzbehälter, wobei die zweiten Aufnahmepositionen (6) auf einer zweiten Ebene angeordnet sind,
wobei die zweite Vorrichtung (4) wenigstens teilweise über der ersten Vorrichtung (3) angeordnet ist,
wobei die zweite Ebene wenigstens teilweise über der ersten Ebene angeordnet ist,
wobei die Pipettiernadel (2) wenigstens teilweise über der ersten (3) und der zweiten Vorrichtung (4) angeordnet ist,
wobei die ersten Aufnahmepositionen (5) auf der ersten Ebene und die zweiten Aufnahmepositionen (6) auf der zweiten Ebene verschiebbar und/oder jeweils um eine Achse (7) drehbar sind,
wobei eine Aussparung (8) in der zweiten Vorrichtung (4) in der zweiten Ebene vorgesehen ist, wobei die Pipettiervorrichtung mittels der Pipettiernadel (2) durch die Aussparung (8) von oben auf mindestens einen in einer der ersten Aufnahmepositionen (5) angeordneten Reagenzbehälter zur Pipettierung zugreifen kann.

2. Vorrichtung (1) nach Anspruch 1, wobei die Aussparung (8) durch Verdrehung und/oder Verschiebung der ersten Aufnahmepositionen (5) auf der ersten Ebene und/oder der zweiten Aufnahmepositionen (6) auf der zweiten Ebene und/oder Verdrehung und/oder Verschiebung der ersten Vorrichtung (3) und/oder der zweiten Vorrichtung (4) jeweils so angeordnet werden kann, dass die Pipettiervorrichtung mittels der Pipettiernadel (2) durch die Aussparung (8) von oben nacheinander auf mehrere in ersten Aufnahmepositionen (5) angeordneten Reagenzbehälter zugreifen kann.

3. Vorrichtung (1) nach einem der vorhergehenden Ansprüche, wobei die Pipettiervorrichtung mittels der Pipettiernadel (2) auf alle in zweiten Aufnahmepositionen (6) angeordneten Reagenzbehältern zugreifen kann.

4. Vorrichtung (1) nach einem der vorhergehenden Ansprüche, wobei die ersten Aufnahmepositionen (5) auf der ersten Ebene und die zweiten Aufnahmepositionen (6) auf der zweiten Ebene jeweils um eine Achse (7) drehbar sind, wobei die Achse (7) der ersten Vorrichtung (3) und die Achse (7) der zweiten Vorrichtung (4) als eine gemeinsame Achse (7) ausgestaltet sind, wobei Drehungen der ersten (3) und der zweiten Vorrichtung (4) um die Achse (7) unabhängig voneinander erfolgen können.

5. Vorrichtung (1) nach einem der vorhergehenden Ansprüche, wobei die ersten Aufnahmepositionen (5) auf der ersten Ebene und/oder die zweiten Aufnahmepositionen (6) auf der zweiten Ebene jeweils um eine Achse (7) drehbar sind, wobei die Achse (7) parallel zu einer Normalen der ersten und/oder der zweiten Ebene verläuft.

6. Vorrichtung (1) nach einem der vorhergehenden Ansprüche, wobei die ersten Aufnahmepositionen (5) auf der ersten Ebene und/oder die zweiten Aufnahmepositionen (6) auf der zweiten Ebene jeweils um eine Achse (7) drehbar sind, wobei die erste (3) und/oder die zweite Vorrichtung (4) als um die Achse (7) drehbares Reagenzrad, bevorzugt als rotierbares Reagenzrad ausgestaltet ist.

7. Vorrichtung (1) nach einem der vorhergehenden Ansprüche, wobei die erste (3) und/oder die zweite Vorrichtung (4) miteinander beweglich verbunden sind.

8. Vorrichtung (1) nach einem der vorhergehenden Ansprüche, wobei die Normalen der ersten und der zweiten Ebene parallele sind, und wobei bevorzugt die Normale der ersten und/oder der zweiten Ebene parallele zum Richtungsvektor der Schwerkraft verläuft.

9. Vorrichtung (1) nach einem der vorhergehenden Ansprüche, wobei die Pipettiervorrichtung und/oder die Pipettiernadel (2) verfahrbar ist, bevorzugt parallel und/oder senkrecht zur Normale der ersten und/oder der zweiten Ebene.

10. Vorrichtung (1) nach einem der vorhergehenden Ansprüche, wobei die Aussparung (8) die Form eines Kreissegments, eines Kreises, eines Ovals, eines Vierecks oder eines Dreiecks aufweist.

11. Vorrichtung (1) nach einem der vorhergehenden Ansprüche, wobei die Vorrichtung (1) eine Transfervorrichtung zum Transferieren von Reagenzbehältern in die ersten (5) und/oder zweiten Aufnahmepositionen (6) hinein und/oder aus diesen heraus umfasst, wobei bevorzugt die Transfervorrichtung durch die Aussparung (8) von oben auf mindestens eine der ersten Aufnahmepositionen (5) zugreifen kann.

12. Verfahren zur Lagerung von Reagenzbehältern auf mehreren Ebenen für ein automatisches Analysegerät mithilfe einer Vorrichtung (1) nach einem der Ansprüche 1 bis 11, das Verfahren umfassend die folgenden Schritte:
- Anordnung mindestens eines ersten Reagenzbehälters in eine der ersten Aufnahmepositionen (5),
- Zugriff mittels der Pipettiernadel (2) durch die Aussparung (8) von oben auf den ersten Reagenzbehälter zur Pipettierung.

13. Verfahren nach Anspruch 12, weiter umfassend die folgenden Schritte:
- Anordnung mindestens eines zweiten Reagenzbehälters in eine der ersten Aufnahmepositionen (5),
- Anordnung der Aussparung (8) durch Verdrehung und/oder Verschiebung der ersten Aufnahmepositionen (5) auf der ersten Ebene und/oder der zweiten Aufnahmepositionen (6) auf der zweiten Ebene und/oder Verdrehung und/oder Verschiebung der ersten Vorrichtung (3) und/oder der zweiten Vorrichtung (5), so dass die Aussparung (8) sich über dem zweiten Reagenzbehälter befindet,
- Zugriff mittels der Pipettiernadel (2) durch die Aussparung (8) von oben auf den zweiten Reagenzbehälter zur Pipettierung.

14. Automatisches Analysegerät umfassend eine Vorrichtung (1) nach einem der Ansprüche 1 bis 11, wobei das automatische Analysegerät bevorzugt einen automatischen Gefäßgreifer umfasst.

15. Verwendung einer Vorrichtung (1) nach einem der Ansprüche 1 bis 11 und/oder eines Verfahrens nach einem der Ansprüche 12 bis 13 in einem automatischen Analysegerät, wobei das automatische Analysegerät bevorzugt einen automatischen Gefäßgreifer umfasst.

## Claims

1. Device (1) for storing reagent containers on multiple levels for an automatic analysis apparatus, the device comprising
- a pipetting device comprising a pipetting needle (2) for pipetting of reagents,
- a first device (3) comprising a plurality of first receiving positions (5) for reagent containers, wherein the first receiving positions (5) are arranged on a first level,
- a second device (4) comprising a plurality of second receiving positions (6) for reagent containers, wherein the second receiving positions (6) are arranged on a second level,
wherein the second device (4) is arranged at least partially above the first device (3),
wherein the second level is arranged at least partially above the first level,
wherein the pipetting needle (2) is arranged at least partially above the first device (3) and the second device (4), wherein the first receiving positions (5) on the first level and the second receiving positions (6) on the second level are displaceable and/or rotatable in each case about an axis (7), wherein a cutout (8) is provided in the second device (4) in the second level, wherein, by means of the pipetting needle (2), the pipetting device can, for pipetting, access, through the cutout (8) from above, at least one reagent container arranged in one of the first receiving positions (5).

2. Device (1) according to Claim 1, wherein, by way of rotation and/or displacement of the first receiving positions (5) on the first level and/or the second receiving positions (6) on the second level and/or rotation and/or displacement of the first device (3) and/or the second device (4), the cutout (8) can in each case be arranged in such a way that, by means of the pipetting needle (2), the pipetting device can successively access, through the cutout (8) from above, multiple reagent containers arranged in first receiving positions (5).

3. Device (1) according to either of the preceding claims, wherein, by means of the pipetting needle (2), the pipetting device can access all the reagent containers arranged in second receiving positions (6).

4. Device (1) according to one of the preceding claims, wherein the first receiving positions (5) on the first level and the second receiving positions (6) on the second level are rotatable in each case about an axis (7), wherein the axis (7) of the first device (3) and the axis (7) of the second device (4) are configured as a common axis (7), wherein rotations of the first device (3) and the second device (4) about the axis (7) can be realized independently of one another.

5. Device (1) according to one of the preceding claims, wherein the first receiving positions (5) on the first level and/or the second receiving positions (6) on the second level are rotatable in each case about an axis (7), wherein the axis (7) extends parallel to a normal to the first level and/or the second level.

6. Device (1) according to one of the preceding claims, wherein the first receiving positions (5) on the first level and/or the second receiving positions (6) on the second level are rotatable in each case about an axis (7), wherein the first device (3) and/or the second device (4) are/is configured as a reagent wheel which is rotatable about the axis (7), preferably as a rotatable reagent wheel.

7. Device (1) according to one of the preceding claims, wherein the first device (3) and/or the second device (4) are/is connected movably to the other.

8. Device (1) according to one of the preceding claims, wherein the normals to the first and second levels are parallel, and wherein preferably the normal to the first level and/or the normal to the second level extend(s) parallel to the direction vector of gravitational force.

9. Device (1) according to one of the preceding claims, wherein the pipetting device and/or the pipetting needle (2) are/is movable, preferably parallel and/or perpendicularly to the normal to the first level and/or the normal to the second level.

10. Device (1) according to one of the preceding claims, wherein the cutout (8) has the shape of a segment of a circle, a circle, an oval, a quadrangle or a triangle.

11. Device (1) according to one of the preceding claims, wherein the device (1) comprises a transfer device for transferring reagent containers into the first receiving positions (5) and/or the second receiving positions (6) and/or therefrom, wherein preferably the transfer device can access at least one of the first receiving positions (5) through the cutout (8) from above.

12. Method for storing reagent containers on multiple levels for an automatic analysis apparatus with the aid of a device (1) according to one of Claims 1 to 11, the method comprising the following steps:
- arranging at least one first reagent container in one of the first receiving positions (5),
- accessing, for pipetting, the first reagent container through the cutout (8) from above by means of the pipetting needle (2).

13. Method according to Claim 12, further comprising the following steps:
- arranging at least one second reagent container in one of the first receiving positions (5),
- by way of rotation and/or displacement of the first receiving positions (5) on the first level and/or the second receiving positions (6) on the second level and/or rotation and/or displacement of the first device (3) and/or the second device (54), arranging the cutout (8) such that the cutout (8) is situated above the second reagent container,
- accessing, for pipetting, the second reagent container through the cutout (8) from above by means of the pipetting needle (2).

14. Automatic analysis apparatus comprising a device (1) according to one of Claims 1 to 11, wherein the automatic analysis apparatus preferably comprises an automatic vessel gripper.

15. Use of a device (1) according to one of Claims 1 to 11 and/or of a method according to either of Claims 12 and 13 in an automatic analysis apparatus, wherein the automatic analysis apparatus preferably comprises an automatic vessel gripper.

## Revendications

1. Dispositif (1) de stockage de récipients à réactifs sur plusieurs plans pour un appareil d'analyse automatique, le dispositif comprenant
- un dispositif de pipetage comprenant une aiguille (2) de pipetage pour le pipetage de réactifs,
- un premier dispositif (3) comprenant une pluralité de premières positions (5) de réception de récipients à réactif, les premières positions (5) de réception étant disposées sur un premier plan,
- un deuxième dispositif (4) comprenant une pluralité de deuxièmes positions (6) de réception de récipients à réactif, les deuxièmes positions (6) de réception étant disposées sur un deuxième plan,
dans lequel le deuxième dispositif (4) est disposé au moins en partie au-dessus du premier dispositif (3),
dans lequel le deuxième plan est disposé au moins en partie au-dessus du premier plan,
dans lequel l'aiguille (2) de pipetage est disposée au moins en partie au-dessus du premier (3) et du deuxième dispositifs (4),
dans lequel les premières positions (5) de réception sur le premier plan et les deuxièmes positions (6) de réception sur le deuxième plan peuvent coulisser et/ou respectivement tourner autour d'un axe (7),
dans lequel un évidement (8) est prévu dans le deuxième dispositif (4) dans le deuxième plan, dans lequel le dispositif de pipetage peut, pour le pipetage, accéder au moyen de l'aiguille (2) de pipetage en passant par l'évidement (8) par le haut à au moins un récipient à réactif disposé dans l'une des premières positions (5) de réception.

2. Dispositif (1) suivant la revendication 1, dans lequel l'évidement (8) est, par rotation et/ou déplacement des premières positions (5) de réception sur le premier plan et/ou des deuxièmes positions (6) de réception sur le deuxième plan et/ou rotation et/ou déplacement du premier dispositif (3) et /ou du deuxième dispositif (4), disposé respectivement de manière à ce que le dispositif de pipetage puisse accéder, au moyen de l'aiguille (2) de pipetage en passant par l'évidement (8) par le haut, les uns après les autres à plusieurs récipients à réactifs disposés dans des premières positions (5) de réception.

3. Dispositif (1) suivant l'une des revendications précédentes, dans lequel le dispositif de pipetage peut accéder au moyen de l'aiguille (2) de pipetage à tous les récipients à réactifs disposés dans les deuxièmes positions (6) de réception.

4. Dispositif (1) suivant l'une des revendications précédentes, dans lequel les premières positions (5) de réception peuvent tourner sur le premier plan et les deuxièmes positions (6) de réception sur le deuxième plan respectivement autour d'un axe (7) dans lequel l'axe (7) du premier dispositif (3) et l'axe (7) du deuxième dispositif (4) sont conformés sous la forme d'un axe (7) commun, des rotations du premier (3) et deuxième dispositif (4) autour de l'axe (7) pouvant s'effectuer indépendamment les unes des autres.

5. Dispositif (1) suivant l'une des revendications précédentes, dans lequel, les premières positions (5) de réception sur le premier plan et/ou les deuxièmes positions (6) de réception sur le deuxième plan peuvent tourner respectivement autour d'un axe (7), l'axe (7) s'étendant parallèlement à une normale au premier et/ou au deuxième plan.

6. Dispositif (1) suivant l'une des revendications précédentes, dans lequel les premières positions (5) de réception sur le premier plan et/ou les deuxièmes positions (6) de réception sur le deuxième plan peuvent tourner respectivement autour d'un axe (7), le premier (3) et/ou le deuxième dispositif (4) étant conformés sous la forme d'une roue à réactif, de préférence d'une roue à réactif tournante, pouvant tourner autour de l'axe (7).

7. Dispositif (1) suivant l'une des revendications précédentes, dans lequel le premier (3) et/ou le deuxième dispositif (4) sont reliés de manière amovible l'un à l'autre.

8. Dispositif (1) suivant l'une des revendications précédentes, dans lequel les normales au premier et au deuxième plans sont parallèles et dans lequel de préférence les normales au premier et/ou au deuxième plans s'étendent parallèlement au vecteur directionnel de la force de la gravité.

9. Dispositif (1) suivant l'une des revendications précédentes, dans lequel le dispositif de pipetage et/ou l'aiguille (2) de pipetage peuvent être déplacés de préférence parallèlement et/ou perpendiculairement à la normale au premier et/ou au deuxième plans.

10. Dispositif (1) suivant l'une des revendications précédentes, dans lequel l'évidement (8) à la forme d'un segment de cercle, d'un cercle, d'un ovale, d'un quadrilatère ou d'un triangle.

11. Dispositif (1) suivant l'une des revendications précédentes, dans lequel le dispositif (1) comprend un dispositif de transfert pour transférer des récipients à réactifs aux premières (5) et/ou aux deuxièmes positions (6) de réception et/ou pour les en retirer, dans lequel de préférence le dispositif de transfert peut accéder par l'évidement (8) par le haut à au moins l'une des premières positions (5) de réception.

12. Procédé de stockage de récipients à réactifs sur plusieurs plans pour un appareil d'analyse automatique à l'aide d'un dispositif (1) suivant l'une des revendications 1 à 11, le procédé comprenant les stades suivants :
- mise d'au moins un premier récipient à réactif dans l'une des premières positions (5) de réception,
- accès au moyen de l'aiguille (2) de pipetage à travers l'évidement (8) par le haut au premier récipient à réactif pour le pipetage.

13. Procédé suivant la revendication 12, comprenant en outre les stades suivants :
- mise d'au moins un deuxième récipient à réactif dans l'une des premières positions (5) de réception,
- mise de l'évidement (8) par rotation et/ou déplacement des premières positions (5) de réception sur le premier plan et/ou des deuxièmes positions (6) de réception sur le deuxième plan et/ou par rotation et/ou par déplacement du premier dispositif (3) et/ou du deuxième dispositif (5) de manière à ce que l'évidement (8) se trouve au-dessus du deuxième récipient à réactif,
- accès au moyen de l'aiguille (2) de pipetage en passant par l'évidement (8) par le haut au deuxième récipient à réactif pour le pipetage.

14. Appareil d'analyse automatique comprenant un dispositif (1) suivant l'une des revendications 1 à 11, l'appareil d'analyse automatique comprenant de préférence un préhenseur automatique de vases.

15. Utilisation d'un dispositif (1) suivant l'une des revendications 1 à 11 et/ou d'un procédé suivant l'une des revendications 12 à 13 dans un appareil d'analyse automatique, l'appareil d'analyse automatique comprenant de préférence un préhenseur automatique de vases.
